# EUROPÄISCHE PATENTSCHRIFT

(11) **EP 1 344 053 B1**
(45) Veröffentlichungstag und Bekanntmachung des Hinweises auf die Patenterteilung: **25.03.2009**
(21) Anmeldenummer: 01991652.7
(22) Anmeldetag: 20.12.2001
(51) Int. Cl.: G01N 30/00, G01N 30/78

(54) **GASCHROMATOGRAPH**
GASCHROMATOGRAPH
CHROMATOGRAPHIE EN PHASE GAZEUSE

(30) Priorität: 21.12.2000 DE 10064138
(43) Veröffentlichungstag der Anmeldung: 17.09.2003
(73) Patentinhaber: SIEMENS AKTIENGESELLSCHAFT, 80333 München (DE)
(72) Erfinder: MÜLLER, Friedhelm, 76351 Linkenheim-Hochstetten (DE)
(86) Internationale Anmeldenummer: PCT/DE2001/004819
(87) Internationale Veröffentlichungsnummer: WO 2002/050530

(56) Entgegenhaltungen:
- US-A- 4 935 145
- US-A- 4 952 126
- DATABASE WPI Section Ch, Week 199804 Derwent Publications Ltd., London, GB; Class J04, AN 1998-038214 XP002902501 & JP 09 292383 A (SHIMADZU CORP), 11. November 1997 (1997-11-11)
- DATABASE WPI Section Ch, Week 200013 Derwent Publications Ltd., London, GB; Class J04, AN 2000-139240 XP002902502 & JP 03 003310 B (YOKOGAWA DENKI KK), 24. Januar 2000 (2000-01-24)
- PATENT ABSTRACTS OF JAPAN vol. 008, no. 183 (P-296), 23. August 1984 (1984-08-23) & JP 59 075151 A (MITSUBISHI JUKOGYO KK), 27. April 1984 (1984-04-27)
- PATENT ABSTRACTS OF JAPAN vol. 011, no. 042 (P-545), 6. Februar 1987 (1987-02-06) & JP 61 212759 A (SHIMADZU CORP), 20. September 1986 (1986-09-20)

## Beschreibung

Die Erfindung betrifft einen Gaschromatographen nach dem Oberbegriff von Anspruch 1 oder 2.

Ein derartiger Gaschromatograph ist aus der JP 09 292383 A bekannt.

Ein Nachteil der Gaschromatographie, insbesondere der Prozessgaschromatographie, ist die Zeit, die zur Trennung der Stoffe in dem zu analysierenden Stoffgemisch notwendig ist. Die Trennzeit lässt sich zwar durch den Einsatz von Hochleistungstrennsäulen oder durch vorgegebene Temperaturverläufe bei der Trennung verkürzen, jedoch können nicht die Analysengeschwindigkeiten von quasikontinuierlichen Verfahren, wie z. B. Spektrometrie, erreicht werden. Bei der Prozesssteuerung oder -regelung müssen jedoch schnelle Prozessveränderungen rasch erkannt werden, um sie ausregeln zu können.

Bei dem aus der oben erwähnten JP 09 292383 A bekannten Gaschromatographen dient die im Verlauf der Trenneinrichtung angeordnete weitere Detektoreinrichtung dazu, die elektrische Leitfähigkeit des Stoffgemischs zu detektieren, um vor der eigentlichen Analyse des Stoffgemischs eine optimale Arbeitstemperatur der Trennvorrichtung zu ermitteln, bei der danach die eigentliche Stofftrennung und Analyse mit einer Detektoreinrichtung am Ende der Trenneinrichtung erfolgt.

Aus der US 4 952 126 ist ein Flüssigchromatograph bekannt, bei dem im Verlauf der Trenneinrichtung eine weitere Detektoreinrichtung angeordnet ist, die in Abhängigkeit von den bis dahin getrennten Stoffen weitere Detektorsignale erzeugt. Diese weiteren Detektorsignale werden dazu weiterverarbeitet, unvollständig getrennte Stoffe zu detektieren und diese zur vollständigen Trennung und anschließenden Detektion durch die gesamte Trenneinrichtung zu leiten, während bis zur weiteren Detektoreinrichtung vollständig getrennte Stoffe anschließend aus der Trenneinrichtung ausgeschleust werden.

Der Erfindung liegt daher die Aufgabe zugrunde, einen Gaschromatographen anzugeben, der vergleichsweise schnelle Analysenergebnisse liefern kann.

Gemäß der Erfindung wird die Aufgabe durch den in Anspruch 1 bzw. Anspruch 2 angegebenen Gaschromatographen gelöst.

Das von der Recheneinrichtung gelieferte weitere Ergebnis, welches auf einer unvollständigen Trennung der Stoffe beruht, ist zwar ungenauer als das von der Auswerteeinrichtung nach vollständiger Trennung der Stoffe gelieferte Ergebnis, liegt andererseits aber wesentlich früher vor. Trotz der unvollständigen Trennung der Stoffe im Bereich der Anordnung der weiteren Detektoreinrichtung lassen sich einzelne Stoffe im Rahmen einer gewissen Ungenauigkeit bereits quantitativ bestimmen, weil bei der Chromatographie die zu analysierenden Stoffe und damit die von der weiteren Detektoreinrichtung zu erwartenden weiteren Detektorsignale (Lage und Form der Peaks) an sich bekannt sind. In jedem Fall ist es möglich, für einzelne Stoffe frühzeitig wesentliche Veränderungen bezüglich ihres Anteils in dem zu analysierenden Stoffgemisch zu erkennen.

Entsprechend Anspruch 1 wird von der Auswerteeinrichtung und der Recheneinrichtung eine Prozesssteuer- und/oder -regeleinrichtung gesteuert, die zur Prozesssteuerung und/oder - regelung bei vergleichsweise großen Änderungsgeschwindigkeiten des weiteren Ergebnisses der Recheneinrichtung zumindest überwiegend das weitere Ergebnis und im Übrigen das Ergebnis der Auswerteeinrichtung heranzieht. Solange der zu steuernde oder zu regelnde Prozess stabil verläuft, werden in der Zusammensetzung der zu analysierenden Stoffgemische nur geringe bzw. langsame Änderungen stattfinden. Die Prozesssteuer- und/oder -regeleinrichtung führt dann anhand der von der Auswerteeinrichtung nach vollständiger Trennung der Stoffe gelieferten genauen Ergebnisse Feinkorrekturen im Prozessablauf durch, um das bestmögliche Prozessresultat beispielsweise bezüglich Qualität oder Ausbeute zu erzielen. Wenn dagegen der Prozess instabil verläuft, d. h. wenn sich die Zusammensetzung des Stoffgemischs schnell und signifikant ändert, ist es erforderlich, dass die Prozesssteuer- und/oder -regeleinrichtung möglichst schnell regelnd oder steuernd in den Prozess eingreift, wobei die Geschwindigkeit, mit der in den Prozess eingegriffen wird, wichtiger ist als die Genauigkeit. Aus diesem Grund werden für kurzfristige Steuer- oder Regeleingriffe in den Prozess die von der Recheneinrichtung gelieferten ungenaueren aber schnellen weiteren Ergebnisse herangezogen.

Entsprechend Anspruch 2 wird die Genauigkeit der von der Recheneinrichtung gelieferten weiteren Ergebnisse erhöht, indem die Recheneinrichtung einen Rechenalgorithmus mit veränderbaren Parametern zur quantitativen Bestimmung der vorgegebenen Stoffe bzw. eines Teils davon enthält, eine Speichereinrichtung zur Speicherung des von der Recheneinrichtung gelieferten weiteren Ergebnisses vorhanden ist, eine Vergleichseinrichtung vorhanden ist, die das Ergebnis der Auswerteeinrichtung und das gespeicherte weitere Ergebnis der Recheneinrichtung vergleicht, und die Recheneinrichtung einen Korrekturalgorithmus enthält, der die Parameter des Rechenalgorithmus in Abhängigkeit von der Abweichung zwischen dem Ergebnis der Auswerteeinrichtung und dem gespeicherten weiteren Ergebnis der Recheneinrichtung im Sinne einer Verringerung dieser Abweichung verändert. Auf diese Weise wird der Rechenalgorithmus ständig optimiert, so dass je nach Anwendungsfall oder Lernvermögen des Rechenalgorithmus das von der Recheneinrichtung frühzeitig gelieferte weitere Ergebnis eine sehr hohe Genauigkeit aufweisen kann. Die Optimierung des Rechenalgorithmus gestaltet sich insoweit vergleichsweise einfach, als, wie bereits oben erwähnt, die zu analysierenden Stoffgemische und damit die von der weiteren Detektoreinrichtung zu erwartenden Detektorsignale an sich bekannt sind.

Als weitere Detektoreinrichtung kommen nur Detektoren infrage, die das Stoffgemisch nicht zerstören, also beispielsweise ein Wärmeleitfähigkeitsdetektor, ein geeigneter optischer Detektor oder ein mit akustischen Oberflächenwellen arbeitender Detektor. Um die Trennleistung der Trenneinrichtung nicht zu beeinträchtigen, ist dabei der von dem Stoffgemisch durchströmte Messpfad der weiteren Detektoreinrichtung vorzugsweise in der Weise ausgebildet, dass seine Querschnittsabmessungen zumindest annähernd den Querschnittsabmessungen der Trenneinrichtung entsprechen. Dadurch wird verhindert, dass der möglichst kurze und scharf begrenzte Dosierpfropf, in dessen Form das Stoffgemisch in die Trenneinrichtung eingeleitet wird, an der Stelle der weiteren Detektoreinrichtung gestört wird.

Entsprechend einer bevorzugten Ausbildung des erfindungsgemäßen Chromatographen besteht die weitere Detektoreinrichtung aus einem Wärmeleitfähigkeitsdetektor mit in einer Brückenschaltung angeordneten Heizwiderständen, von denen zwei in den beiden unterschiedlichen Brückenhälften einander diagonal gegenüberliegende Heizwiderstände in dem Messpfad angeordnet sind; die beiden anderen Heizwiderstände liegen dann in einem Referenzpfad. Der Wärmeleitfähigkeitsdetektor kann in vorteilhafter Weise alternierend als die Detektoreinrichtung und als die weitere Detektoreinrichtung arbeiten, wobei dann die beiden anderen Heizwiderstände in einem von dem Stoffgemisch durchströmten Messpfad der der Trenneinrichtung nachgeordneten Detektoreinrichtung angeordnet sind. Der Messpfad jeder der beiden Detektoreinrichtungen bildet dabei zugleich den Referenzpfad der jeweils anderen Detektoreinrichtung. Da nämlich der Dosierpfropf mit dem zu analysierenden Stoffgemisch zuerst die weitere Detektoreinrichtung passiert und erst später die Detektoreinrichtung erreicht, also niemals beide Detektoreinrichtungen gleichzeitig durchströmt, kann immer einer der beiden Messpfade der Detektoreinrichtung und der weiteren Detektoreinrichtung, der gerade nicht von dem Stoffgemisch durchströmt wird, als Referenzpfad dienen.

Zur weiteren Erläuterung der Erfindung wird im Folgenden auf die Figuren der Zeichnung Bezug genommen; im Einzelnen zeigen:
- Figur 1: ein Ausführungsbeispiel des erfindungsgemäßen Chro- matographen,
- Figur 2: ein Beispiel für die von der Detektoreinrichtung und der weiteren Detektoreinrichtung gelieferten De- tektorsignale und weiteren Detektorsignale und
- Figur 3: ein Ausführungsbeispiel für die Detektoreinrichtung und die weitere Detektoreinrichtung.

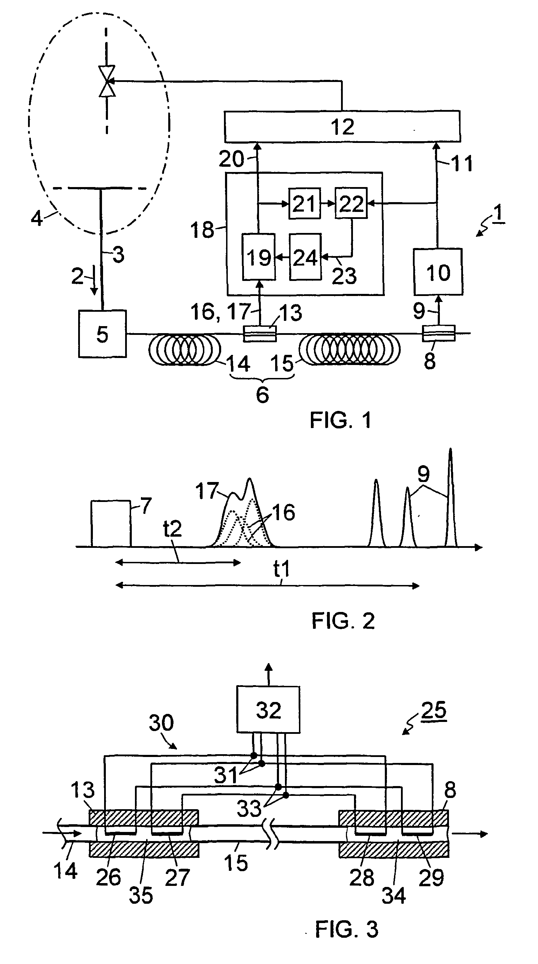

Figur 1 zeigt einen Gaschromatographen 1, zur Analyse eines Stoffgemischs 2, das über eine Leitung 3 aus einem technischen Prozess 4 entnommen wird. Das Stoffgemisch 2 wird dazu in einer Aufbereitungs- und Dosiereinrichtung 5 für die chromatographische Analyse aufbereitet, beispielsweise verdampft, und einer Trenneinrichtung 6 dosiert zugeführt. Die Dosierung erfolgt in der Weise, dass aus dem Stoffgemisch ein möglichst kurzer und scharf begrenzter Dosierpfropf 7 ausgeblendet wird, so wie dies in Figur 2 verdeutlicht ist. Die Trenneinrichtung 6 ist dazu ausgebildet, die in dem dosierten Stoffgemisch 2 enthaltenen Stoffe beim Durchströmen der Trenneinrichtung 6 zu trennen, so dass die einzelnen Stoffe zeitlich nacheinander an eine Detektoreinrichtung 8 am Ende der Trenneinrichtung 6 gelangen und dort detektiert werden. Bei dem gezeigten Ausführungsbeispiel besteht die Detektoreinrichtung 8 aus einem Wärmeleitfähigkeitsdetektor, der, wie Figur 2 zeigt, für jeden detektierten Stoff ein typisches Detektorsignal 9 in Form eines Peaks erzeugt, dessen Höhe und Flächeninhalt von der Stoffmenge und der Wärmeleitfähigkeit des detektierten Stoffes abhängig ist. In einer der Detektoreinrichtung 8 nachgeordneten Auswerteeinrichtung 10 erfolgt auf der Grundlage der Detektorsignale 9 eine quantitative Bestimmung ausgewählter Stoffe des zu analysierenden Stoffgemischs 2. Das dabei erhaltene Ergebnis 11, also die Mengen bzw. Konzentrationen der ausgewählten Stoffe, wird einer Prozesssteuer- und/oder -regeleinrichtung 12 zugeführt, die in Abhängigkeit von dem Ergebnis 11 steuernd bzw. regelnd in den Prozess 4 eingreift.

Aufgrund der für die vollständige Trennung der zu analysierenden Stoffe des Stoffgemischs 2 erforderlichen Trennzeit t1 (Figur 2) liegen die Ergebnisse 11 gegenüber der Entnahme des Stoffgemischs 2 aus dem Prozess 4 stark verzögert vor, so dass sie im Wesentlichen nur für eine langfristige Prozesssteuerung oder -regelung geeignet sind, beispielsweise zur Ausführung von Feinkorrekturen an dem stabil verlaufenden Prozess 4, um beispielsweise eine bestmögliche Qualität oder Ausbeute von in dem Prozess 4 herzustellenden Produkten zu erreichen. Wenn dagegen der Prozess 4 instabil verläuft, sind in der Regel sehr kurzfristige Eingriffe in den Prozess 4 erforderlich, um dem instabilen Prozessverlauf entgegenzusteuern, wobei zumeist die Geschwindigkeit, mit der der Eingriff erfolgt, wichtiger ist als dessen Genauigkeit. Um solche schnellen Prozesseingriffe zu ermöglichen, ist im Verlauf der Trenneinrichtung 6 eine weitere Detektoreinrichtung 13 angeordnet, die die Stoffe des Stoffgemischs 2 nur unvollständig getrennt; aber dafür in relativ kurzer Zeit t2 (Figur 2) nach der Entnahme des Stoffgemischs 2 aus dem Prozess 4 detektiert. Wie unten noch näher erläutert wird, ist die Detektoreinrichtung 13 derart ausgebildet und angeordnet, dass sie die Trennleistung der Trenneinrichtung 6 nicht beeinträchtigt. Bei dem gezeigten Ausführungsbeispiel besteht die Trenneinrichtung 6 aus zwei Trennsäulenabschnitten 14 und 15, zwischen die die weitere Detektoreinrichtung 13 "inline" geschaltet ist, wobei der von dem Stoffgemisch 2 durchströmte Messpfad der weiteren Detektoreinrichtung 13 zumindest annähernd dieselben inneren Querschnittsabmessungen aufweist wie die Trennsäulenabschnitte 14 und 15.

Wie Figur 2 zeigt, überlappen sich die von der weiteren Detektoreinrichtung 13 gelieferten Detektorsignale 16 (Peaks) aufgrund der unvollständigen Trennung der Stoffe zu einem Summensignal 17. Da jedoch die in dem zu analysierenden Stoffgemisch 2 enthaltenen Stoffe und damit die Peakform der einzelnen zu erwartenden Detektorsignale 16 bekannt sind, ist es möglich, anhand des Summensignals 17 einzelne Stoffe zumindest grob quantitativ zu bestimmen. Dies erfolgt in einer Recheneinrichtung 18 mittels eines Rechenalgorithmus 19, wobei das dabei erhaltene weitere Ergebnis 20 der Prozesssteuer- und/oder -regeleinrichtung 12 zugeführt wird. Solange der Prozess 4 stabil verläuft, wird sich die Zusammensetzung des Stoffgemischs 2 nicht bzw. nur langsam und wenig ändern. Schnelle signifikante Veränderungen des Stoffgemischs weisen dagegen auf einen instabilen Prozessverlauf hin. Solche schnellen Veränderungen in der Zusammensetzung des Stoffgemischs 2 werden von der weiteren Detektoreinrichtung 13 und dem nachgeordneten Rechenalgorithmus 19 mit hinreichender Genauigkeit erkannt. Zur schnellen Ausregelung instabiler Prozessverläufe zieht daher die Prozesssteuer- und/oder -regeleinrichtung 12 ausschließlich oder zumindest überwiegend das von der Recheneinrichtung 18 gelieferte weitere Ergebnis 20 heran.

Um den Rechenalgorithmus 19 laufend zu optimieren, wird das von ihr gelieferte weitere Ergebnis 20 in einer Speichereinrichtung 21 so lange zwischengespeichert, bis das von der Auswerteeinrichtung 10 gelieferte Ergebnis 11 vorliegt. Beide Ergebnisse 11 und 20 werden in einer Vergleichseinrichtung 22 miteinander verglichen, wobei Abweichungen 23 zwischen den beiden Ergebnissen 11 und 20 einem Korrekturalgorithmus 24 zugeführt werden, der Parameter des Rechenalgorithmus 19 im Sinne einer Verringerung dieser Abweichung 23, d. h. des Rechenfehlers, verändert. Ein Beispiel für den Korrekturalgorithmus 24 ist das so genannte Gradientenabstiegsverfahren.

Figur 3 zeigt einen Wärmeleitfähigkeitsdetektor 25, der abwechselnd als die Detektoreinrichtung 8 und als die weitere Detektoreinrichtung 13 arbeitet. Der Wärmeleitfähigkeitsdetektor 25 weist vier drahtförmige Heizwiderstände 26, 27, 28 und 29 auf, die in einer Brückenschaltung 30 angeordnet sind, wobei die Brückenschaltung 30 an zwei einander gegenüberliegenden Schaltungspunkten 31 aus einer Detektorschaltung 32 mit einem Strom gespeist wird und die zwischen den beiden anderen gegenüberliegenden Schaltungspunkten 33 auftretende Spannung von der Detektorschaltung 32 zur Erzeugung der Detektorsignale 9 erfasst wird. Die in der Brückenschaltung 30 einander diagonal gegenüberliegenden Heizwiderstände 28 und 29 sind am Ende des Trennsäulenabschnitts 15 in einem Messpfad 34 der Detektoreinrichtung 8 angeordnet, während die beiden übrigen Heizwiderstände 26 und 27 in einem zwischen die beiden Trennsäulenabschnitte 14 und 15 geschalteten weiteren Messpfad 35 der weiteren Detektoreinrichtung 13 angeordnet sind. Die Messpfade 34 und 35, insbesondere aber der Messpfad 35, sind derart ausgebildet, dass ihre inneren Querschnittsabmessungen denen der Trennsäulenabschnitte 14 und 15 entsprechen, so dass die Trennleistung der Trenneinrichtung 6 durch das Zwischenschalten der weiteren Detektoreinrichtung 13 nicht beeinträchtigt wird. Ein Dosierpfropf, der mittels eines Trägergases von der Aufbereitungs- und Dosiereinrichtung 5 (Figur 1) kommend in die Trenneinrichtung 6 eingeleitet wird, gelangt zunächst in den Messpfad 35 der weiteren Detektoreinrichtung 13, während der Messpfad 34 der Detektoreinrichtung 8 von dem Trägergas durchströmt wird. Der Wärmeleitfähigkeitsdetektor 25 arbeitet dann als die weitere Detektoreinrichtung 13, wobei der Messpfad 34 der Detektoreinrichtung 8 als Referenzpfad dient. Wenn der Dosierpfropf schließlich in den Messpfad 34 der Detektoreinrichtung 8 gelangt, arbeitet der Wärmeleitfähigkeitsdetektor 25 als die Detektoreinrichtung 8, wobei der von dem Trägergas durchströmte Messpfad 35 der weiteren Detektoreinrichtung 13 als Referenzpfad für die Detektoreinrichtung 8 dient. Die Heizwiderstände 26, 27, 28 und 29 und die Innenwände der Messpfade 34 und 35 bestehen aus Materialien, die sich gegenüber dem zu analysierenden Stoffgemisch bzw. dem Trägergas inert verhalten, also beispielsweise aus Gold bzw. Siliziumdioxid (Quarz), so dass eine Veränderung des Stoffgemischs aufgrund chemischer Reaktionen ausgeschlossen ist.

## Patentansprüche

1. Gaschromatograph mit einer Trenneinrichtung (6), die Stoffe eines ihr dosiert zugeführten und sie durchlaufenden Stoffgemischs (2) trennt, mit einer der Trenneinrichtung (6) nachgeordneten Detektoreinrichtung (8), die in Abhängigkeit von den ankommenden getrennten Stoffen Detektorsignale (9) erzeugt, mit einer an der Detektoreinrichtung (8) angeschlossenen Auswerteeinrichtung (10), die als Ergebnis (11) eine quantitative Bestimmung vorgegebener Stoffe in Abhängigkeit von den Detektorsignalen (9) liefert, und mit einer im Verlauf der Trenneinrichtung (6) angeordneten weiteren Detektoreinrichtung (13), **dadurch gekennzeichnet, dass** die weitere Detektoreinrichtung (13) in Abhängigkeit von den bis dahin unvollständig getrennten Stoffen weitere Detektorsignale (16) erzeugt, dass an der weiteren Detektoreinrichtung (13) eine Recheneinrichtung (18) angeschlossen ist, die als weiteres Ergebnis (20) eine quantitative Bestimmung zumindest eines Teils der vorgegebenen Stoffe in Abhängigkeit von den weiteren Detektorsignalen (16) liefert, und dass eine von der Auswerteeinrichtung (10) und der Recheneinrichtung (18) gesteuerte Prozesssteuer- und/oder -regeleinrichtung (12) vorhanden ist, die zur Prozesssteuerung und/oder - regelung bei vergleichsweise großen Änderungsgeschwindigkeiten des weiteren Ergebnisses (20) der Recheneinrichtung (18) zumindest überwiegend das weitere Ergebnis (20) und im Übrigen das Ergebnis (11) der Auswerteeinrichtung (10) heranzieht.

2. Gaschromatograph mit einer Trenneinrichtung (6), die Stoffe eines ihr dosiert zugeführten und sie durchlaufenden Stoffgemischs (2) trennt, mit einer der Trenneinrichtung (6) nachgeordneten Detektoreinrichtung (8), die in Abhängigkeit von den ankommenden getrennten Stoffen Detektorsignale (9) erzeugt, mit einer an der Detektoreinrichtung (8) angeschlossenen Auswerteeinrichtung (10), die als Ergebnis (11) eine quantitative Bestimmung vorgegebener Stoffe in Abhängigkeit von den Detektorsignalen (9) liefert, und mit einer im Verlauf der Trenneinrichtung (6) angeordneten weiteren Detektoreinrichtung (13), **dadurch gekennzeichnet, dass** die weitere Detektoreinrichtung (13) in Abhängigkeit von den bis dahin unvollständig getrennten Stoffen weitere Detektorsignale (16) erzeugt, dass an der weiteren Detektoreinrichtung (13) eine Recheneinrichtung (18) angeschlossen ist, die als weiteres Ergebnis (20) eine quantitative Bestimmung zumindest eines Teils der vorgegebenen Stoffe in Abhängigkeit von den weiteren Detektorsignalen (16) liefert, dass die Recheneinrichtung (18) einen Rechenalgorithmus (19) mit veränderbaren Parametern zur quantitativen Bestimmung der vorgegebenen Stoffe bzw. eines Teils davon enthält, dass eine Speichereinrichtung (21) zur Speicherung des von der Recheneinrichtung (18) gelieferten weiteren Ergebnisses (20) vorhanden ist, dass eine Vergleichseinrichtung (22) vorhanden ist, die das Ergebnis (11) der Auswerteeinrichtung (10) und das gespeicherte weitere Ergebnis (20) der Recheneinrichtung (18) vergleicht, und dass die Recheneinrichtung (18) einen Korrekturalgorithmus (24) enthält, der die Parameter des Rechenalgorithmus (19) in Abhängigkeit von der Abweichung (23) zwischen dem Ergebnis (11) der Auswerteeinrichtung (10) und dem gespeicherten weiteren Ergebnis (20) der Recheneinrichtung (18) im Sinne einer Verringerung der Abweichung (23) verändert.

3. Gaschromatograph nach Anspruch 1 in Kombination mit Anspruch 2.

4. Gaschromatograph nach einem der vorangehenden Ansprüche, **dadurch gekennzeichnet, dass** die weitere Detektoreinrichtung (13) einen von dem Stoffgemisch durchströmten Messpfad (35) aufweist, dessen Querschnittsabmessungen zumindest annähernd den Querschnittsabmessungen der Trenneinrichtung (6) entsprechen.

5. Gaschromatograph nach Anspruch 4, **dadurch gekennzeichnet, dass** die weitere Detektoreinrichtung (13) ein Wärmeleitfähigkeitsdetektor (25) mit in einer Brückenschaltung angeordneten Heizwiderständen (26, 27, 28, 29) ist, von denen zwei in den beiden unterschiedlichen Brückenhälften einander diagonal gegenüberliegende Heizwiderstände (26, 27) in dem Messpfad (35) angeordnet sind.

6. Gaschromatograph nach Anspruch 5, **dadurch gekennzeichnet, dass** der Wärmeleitfähigkeitsdetektor (25) alternierend als die Detektoreinrichtung (8) und als die weitere Detektoreinrichtung (13) arbeitet, wobei die beiden anderen Heizwiderstände (28, 29) in einem von dem Stoffgemisch durchströmten Messpfad (34) der der Trenneinrichtung (6) nachgeordneten Detektoreinrichtung (8) angeordnet sind.

## Claims

1. Gas chromatograph having a separator (6) which separates substances in a mixture (2) of substances fed to it in a dosed manner and passing through it, having a detector device (8) downstream of the separator (6) which generates detector signals (9) as a function of the incoming separated substances, having an evaluation device (10) connected to the detector device (8) which as its result (11) supplies a quantitative determination of predefined substances as a function of the detector signals (9), and having a further detector device (13) arranged in the run of the separator (6), **characterised in that** the further detector device (13) generates further detector signals (16) as a function of the substances incompletely separated up to that point, that a calculation device (18) is connected to the further detector device (13) which as a further result (20) supplies a quantitative determination of at least some of the predefined substances as a function of the further detector signals (16), and that a process control device and/or process regulation device (12) controlled by the evaluation device (10) and the calculation device (18) is provided which at least preponderantly makes use of the further result (20) and otherwise the result (11) of the evaluation device (10) for process control and/or process regulation at comparatively high rates of change of the further result (20) of the calculation device (18).

2. Gas chromatograph having a separator (6) which separates substances in a mixture (2) of substances fed to it in dosed manner and passing through it, having a detector device (8) downstream of the separator (6) which generates detector signals (9) as a function of the incoming separated substances, having an evaluation device (10) connected to the detector device (8) which as its result (11) supplies a quantitative determination of predefined substances as a function of the detector signals (9), and having a further detector device (13) arranged in the run of the separator (6), **characterised in that** the further detector device (13) generates further detector signals (16) as a function of the substances incompletely separated up to that point, that a calculation device (18) is connected to the further detector device (13) which as a further result (20) supplies a quantitative determination of at least some of the predefined substances as a function of the further detector signals (16), that the calculation device (18) contains a calculation algorithm (19) with changeable parameters for the quantitative determination of the predefined substances or some of them, that a storage device (21) for storing the further result (20) supplied by the calculation device (18) is provided, that a comparison device (22) is provided which compares the result (11) of the evaluation device (10) and the stored further result (20) of the calculation device (18), and that the calculation device (18) contains a correction algorithm (24) which changes the parameters of the calculation algorithm (19) as a function of the deviation (23) between the result (11) of the evaluation device (10) and the stored further result (20) of the calculation device (18) for the purpose of diminishing the deviation (23).

3. Gas chromatograph according to claim 1 in combination with claim 2.

4. Gas chromatograph according to one of the preceding claims, **characterised in that** the further detector device (13) has a measurement path (35) through which the mixture of substances flows, the cross-sectional dimensions of which correspond at least approximately to the cross-sectional dimensions of the separator (6).

5. Gas chromatograph according to claim 4, **characterised in that** the further detector device (13) is a thermal-conductivity detector (25) with heating resistors (26, 27, 28, 29) arranged in a bridge circuit, wherein two of said heating resistors (26, 27) lying diagonally opposite one another in the two different halves of the bridge are arranged in the measurement path (35)

6. Gas chromatograph according to claim 5, **characterised in that** the thermal-conductivity detector (25) works alternately as the detector device (8) and as the further detector device (13), wherein the other two heating resistors (28, 29) are arranged in a measurement path (34) - through which the mixture of substances flows - of the detector device (8) arranged downstream of the separator (6).

## Revendications

1. Chromatographe en phase gazeuse ayant un dispositif ( 6 ) de séparation, qui sépare les substances d'un mélange ( 2 ) qui lui apporté de façon dosée et qui le traverse, un dispositif ( 8 ) formant détecteur, qui est disposé en aval du dispositif ( 6 ) de séparation et qui produit des signaux ( 9 ) de détecteur en fonction des substances séparées qui arrivent, un dispositif ( 10 ) d'évaluation, qui est raccordé au dispositif ( 8 ) formant détecteur et qui fournit en résultat ( 11 ) une détermination quantitative de substances prescrites en fonction des signaux ( 9 ) du détecteur, et un autre dispositif ( 13 ) formant détecteur, disposé dans le tracé du dispositif ( 6 ) de séparation, **caractérisé en ce que** l'autre dispositif ( 13 ) formant détecteur produit d'autres signaux ( 16 ) de détecteur en fonction des substances séparées jusque là complètement, **en ce qu'**à l'autre dispositif ( 13 ) est raccordé un dispositif ( 18 ) de calcul, qui fournit, comme autre résultat ( 20 ), une détermination quantitative au moins d'une partie des substances prescrites en fonction des autres signaux ( 16 ) de détecteur et **en ce qu'**il y a un dispositif de commande et/ou de régulation de processus, commandé par le dispositif ( 10 ) d'exploitation et par le dispositif ( 18 ) de calcul qui, pour la commande de processus et/ou la régulation de processus, tire parti, pour des vitesse de variation relativement grandes, de l'autre résultat ( 20 ) du dispositif ( 18 ) de calcul, au moins d'une manière prépondérante de l'autre résultat ( 20 ) et en outre du résultat ( 11 ) du dispositif ( 10 ) d'exploitation.

2. Chromatographe en phase gazeuse ayant un dispositif ( 6 ) de séparation, qui sépare les substances d'un mélange ( 2 ) qui lui apporté de façon dosée et qui le traverse, un dispositif ( 8 ) formant détecteur, qui est disposé en aval du dispositif ( 6 ) de séparation et qui produit des signaux ( 9 ) de détecteur en fonction des substances séparées qui arrivent, un dispositif ( 10 ) d'évaluation, qui est raccordé au dispositif ( 8 ) formant détecteur et qui fournit en résultat ( 11 ) une détermination quantitative de substances prescrites en fonction des signaux ( 9 ) du détecteur, et un autre dispositif ( 13 ) formant détecteur disposé dans le tracé du dispositif ( 6 ) de séparation, **caractérisé en ce que** l'autre dispositif ( 13 ) formant détecteur produit d'autres signaux ( 16 ) de détecteur en fonction des substances séparées jusqu'ici incomplètement, **en ce qu'**à l'autre dispositif ( 13 ) formant détecteur est raccordé un dispositif ( 18 ) de calcul, qui fournit, comme autre résultat ( 20 ), une détermination quantitative d'au moins une partie des substances prescrites en fonction des autres signaux ( 16 ) de détecteurs **en ce que** le dispositif ( 18 ) de calcul comporte un algorithme ( 19 ) de calcul à paramètres variables pour la détermination quantitative des substances prescrites ou d'une partie de celles-ci, **en ce qu'**il y a un dispositif ( 21 ) de mémoire, pour mémoriser l'autre résultat ( 20 ) fourni par le dispositif ( 18 ) de calcul, **en ce qu'**il y un dispositif ( 22 ) de comparaison, qui compare le résultat ( 11 ) du dispositif ( 10 ) d'exploitation et l'autre résultat ( 20 ) mémorisé du dispositif ( 18 ) de calcul et **en ce que** le dispositif ( 18 ) de calcul comporte un algorithme ( 24 ) de correction, qui modifie les paramètres de l'algorithme ( 19 ) de calcul en fonction de l'écart ( 23 ) entre le résultat ( 11 ) du dispositif ( 10 ) d'exploitation et l'autre résultat ( 20 ) mémorisé du dispositif ( 18 ) de calcul dans le sens d'une diminution de l'écart ( 23 ).

3. Chromatographe en phase gazeuse suivant la revendication 1 en combinaison avec la revendication 2.

4. Chromatographe en phase gazeuse suivant l'une des revendications précédentes, **caractérisé en ce que** l'autre dispositif ( 13 ) formant détecteur a un trajet ( 35 ) de mesure, qui est parcouru par le mélange de substances et dont les dimensions de la section transversale correspondent au moins à peu près aux dimensions de la section transversale du dispositif ( 6 ) de séparation.

5. Chromatographe en phase gazeuse suivant la revendication 4, **caractérisé en ce que** l'autre dispositif ( 13 ) formant détecteur est un détecteur ( 25 ) de conductibilité de la chaleur, ayant des résistances ( 26, 27, 28, 29 ) de chauffage, disposées suivant un circuit en pont, dont deux résistances ( 26, 27 ) de chauffage, diagonalement opposées dans les deux moitiés de pont différentes, sont disposées dans le trajet ( 35 ) de mesure.

6. Chromatographe en phase gazeuse suivant la revendication 5, **caractérisé en ce que** le détecteur ( 25 ) de conductibilité de la chaleur fonctionne en alternance comme dispositif ( 8 ) formant détecteur, et comme autre dispositif ( 13 ) formant détecteur les deux autres résistances ( 28, 29 ) de chauffage étant disposées dans un trajet ( 34 ) de mesure, qui est parcouru par le mélange de substances du dispositif ( 8 ) formant détecteur en aval du dispositif ( 6 ) de séparation.
